# EUROPEAN PATENT APPLICATION

(11) **EP 1 184 297 A1**
(43) Date of publication of application: **06.03.2002**
(21) Application number: 01912254.8
(22) Date of filing: 12.03.2001
(51) Int. Cl.: B65D 75/26, B65B 7/06, B65B 51/10

(54) **WRAPPER AND DEVICE AND METHOD FOR MANUFACTURING THE SAME**

(30) Priority: 13.03.2000 JP 2000067968; 24.10.2000 JP 2000324382
(71) Applicant: Kabushiki Kaisha Fujishiro, Youkaichiba-shi, Chiba 289-2131 (JP)
(72) Inventor: FUJISHIRO, Mamoru, Sakura-shi, Chiba 285-0858 (JP)
(74) Representative: Liebetanz, Michael, Dipl.-Phys.
(86) International application number: JP0101894
(87) International publication number: WO0168471

(57) **Abstract**

There is provided a wrapper superior in sealing property with a semi-welded part positioned between a welded part and a non-welded part to prevent a film wrapper from thinning too much as well as a device and a method for manufacturing the wrapper. The wrapper comprises a film wrapper mainly composed of a resin with its end opening being gathered and weld-sealed through exothermic heat by super sonic vibration. The weld-sealed end opening includes a completely welded part and a semi-welded part continuous therewith.

## Description

### Technical Field

This invention relates to a wrapper, and a device and a method for manufacturing the same, specifically to a wrapper where its end opening of a film wrapper is gathered and weld-sealed, and a device and a method for manufacturing the same.

### Background Art

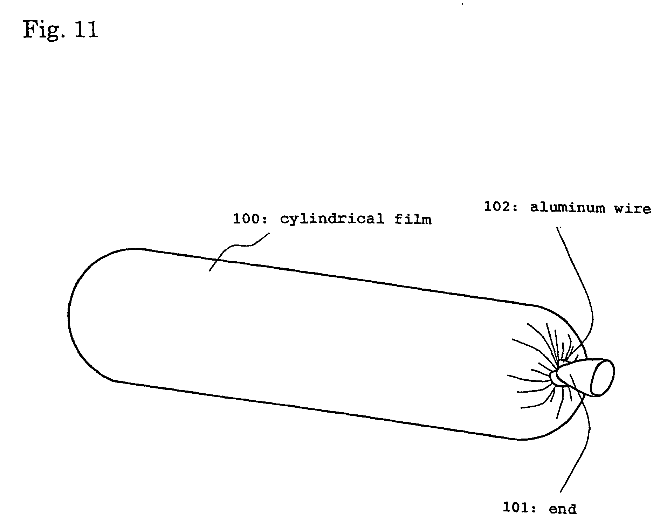

Conventionally, there has been known a wrapper of such process meat as ham and sausage as well as such water- or oil-rich food as wild plants for eating and daily dishes. As shown in Fig. 11, this sort of wrapper comprises a cylindrical film 100 having its end opening 101 gathered and a piece of aluminum wire 102 fastened thereto.

In such a wrapper, it is difficult to control a fastening intensity of aluminum wire. If the intensity is too weak to fasten, water or oil of a wrapped material (it may be referred to as "content".) leaks from the wrapper. On the other hand, if the intensity is too strong to fasten, the wrapper film tears off at the wire portion, thereby causing water or oil to leak.

These problem occurs not only immediately after fastening the aluminum wire but also after a long while. That is, even if there has been nothing wrong at the time of shipping, the leaking may happen at stores or consumers house, causing severe damages.

Further, aluminum is detected with a metal detector when conducting a metal detection for the content which is one of the product inspections. Thus, the cumbersome viewing has been inevitable at the periphery of aluminum wire in place of the metal detector.

In terms of fractional disposal of the waste, it is requested to separate the aluminum wire from the film wrapper. It is, however, difficult to make this separation. Accordingly, the film wrapper has been disposed with the aluminum wire attached. Namely, aluminum has not been reused.

To solve the aforementioned problems the idea of welding an end of film wrapper was proposed instead of using aluminum wire.

There, however, still have been such problems with the welding as causing a film wrapper to tear or allowing a pinhole to be generated at the boundary between a welding part and a non-welding part as well as making a film wrapper very thin thereby weakening the physical strength of the film wrapper topically. Therefore, the tearing of the film wrapper has not been avoided, resulting in the failure of sealing.

The present invention has been proposed to solve these problems, of which object is to provide a wrapper superior to sealing as well as a device and a method for producing the same, by forming a semi-welded part disposed between a welded part and a non-welded part in order to keep the film wrapper from thinning too much.

Japanese Patent Application Laid-Open (JP-A) No. 63-272637 (titled: "Wrapper and Method and Device for Producing the Same") discloses the idea of obtaining a wrapper with a strong welded part by welding a sheet of wrapper film together with a sheet of reinforcing film. This, however, does not teach how to avoid the above-mentioned tearing at the boundary between a welded part and a non-welded part.

Japanese Patent Application Laid-Open (JP-A) No. 11-165713 (titled: "Cylindrical Wrapper and Method and Device for Producing the Same") discloses the idea of obtaining a wrapper with a uniformly pressed seal portion by folding a film so as to sandwich a longitudinal seal part and then conducting supersonic welding thereto. This also, however, does not teach how to avoid the above-mentioned tearing at the boundary between a welded part and a non-welding part.

### Disclosure of the Invention

In order to accomplish above-described objects, the wrapper of the present invention comprises a film wrapper mainly composed of a resin with its end opening being gathered and weld-sealed through exothermic heat by super sonic vibration, characterized in that the weld-sealed end opening includes a completely welded part and a semi-welded part continuous therewith.

The device of the present invention is to manufacture the wrapper comprising a film wrapper mainly composed of a resin with its end opening being gathered and weld-sealed through exothermic heat by super sonic vibration, characterized in that this device includes an anvil on which the gathered part of the wrapper is placed on, and a horn wider than the anvil in a longitudinally direction of the gathered opening.

This device is further characterized in that the anvil is beveled at the longitudinal end and in that this device includes a film guide for guiding the gathered part of the film wrapper onto the anvil.

The method of the present invention is for manufacturing the wrapper comprising a film wrapper mainly composed of a resin with its end opening being gathered and weld-sealed through exothermic heat by super sonic vibration, characterized in that this method includes the steps of gathering an end opening of the film wrapper, and providing a gathered part with supersonic vibration and welding the gathered part, thereby forming a completely welded part and a semi-welded part continuous therewith.

### Brief Description of the Drawings

Fig. 1(a) is a schematic view showing the features of the wrapper of the present invention;
Fig. 1(b) is an enlarged view of the sealed part of the wrapper shown in Fig. 1(a);
Fig. 2(a) is a schematic side view showing the entire structure of the device of the present invention;
Fig. 2(b) is a schematic front view showing the entire structure of the device of the present invention;
Fig. 3(a) is a perspective view showing an assembled receiving jig of the device in one aspect of the present invention;
Fig. 3(b) is a view showing a decomposed receiving jig of the device shown in Fig. 3(a);
Fig. 4 is a view showing how the receiving jig cooperates with the horn;
Fig. 5 is a view showing a decomposed receiver jig of the device in another aspect of the present invention;
Fig. 6(a) is a schematic cross sectional view taken along the line A - A in Fig. 4 showing how the film wrapper is gathered;
Fig. 6(b) is a schematic cross sectional view taken along the line B - B in Fig. 4 showing how the gathered part of film wrapper is welded;
Fig. 7 is a schematic cross sectional view showing how the film wrapper is gathered in still another aspect of the present invention;
Fig. 8 is a schematic enlarged cross sectional view showing how the film wrapper is welded;
Fig. 9(a) is a schematic cross sectional view showing the twist-gathered film wrapper;
Fig. 9(b) is a schematic cross sectional view showing the pleat-gathered film wrapper;
Fig. 9(c) is a schematic cross sectional view showing the radically squeeze-gathered film wrapper;
Fig. 10 is a table showing the results of leakage test for the wrappers of the present invention and the conventional wrappers;
Fig. 11 is a schematic perspective view showing the conventional wrapper.

### Best Mode for Carrying Out the Invention

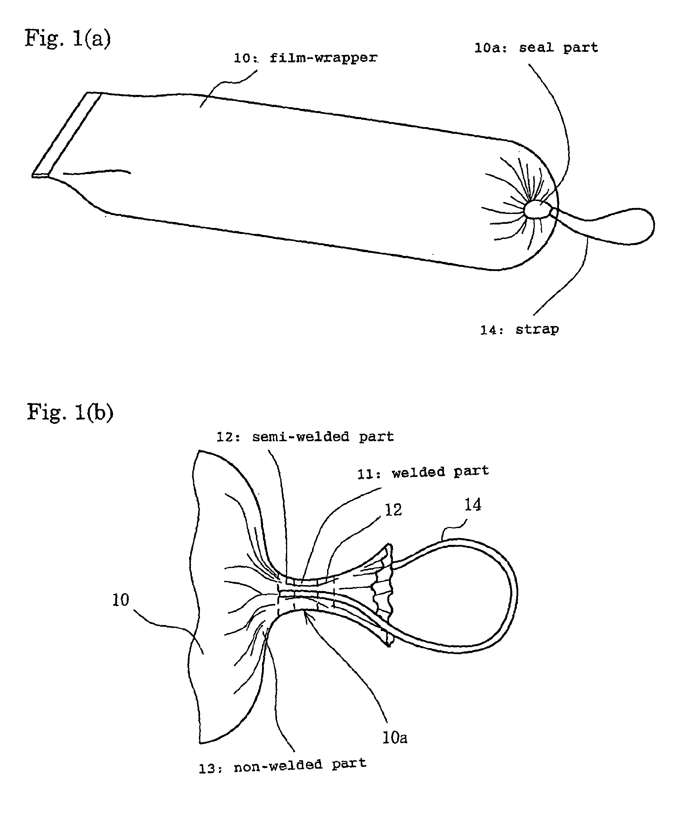

The embodiments of the present invention will be described in detail referring to the drawings. First, the wrapper of the present invention will be described. Fig. 1(a) is a schematic view showing the features of the wrapper of the present invention. On the other hand, Fig. 1(b) is an enlarged view of the sealed part of the wrapper shown in Fig. 1(a).

In these figures, the wrapper comprises a bag-like film wrapper 10 having a content (not shown) enclosed therein and a seal part 10a formed by gathering and weld-sealing an opening of the film wrapper 10 through exothermic heat by super sonic vibration.

The film wrapper 10 may be either a single-layer film or a multi-layer film, as long as it is principally made of a resin. In addition, the film wrapper 10 may be either a woven fabric or a nonwoven fabric.

Although the sort of resins for the wrapper may be of any material, the thermoplastic resin may generally be used. For instance, the usable thermoplastic resin may be vinyl chloride, vinylidene chloride, polyethylene, polypropylene, Nylon, polyester, polystyrene, methacrylate, polyvinyl alcohol, polyurethane, polyacetal, AS(acrylonitrile + styrene), ABS (acrylonitrile + butadiene + styrene), acetate, diacetate, triacetate, polycarbonate, Tetoron, etc.

As shown in Fig. 1(b), the seal part 10a comprises completely welded part 11 and semi-welded parts 12 continuous therewith.

The semi-welded parts 12 cannot be too thin. In addition, there will be no tearing or pinhole at the boundary between the welded part 11 and non-welded part 13, since the semi-welded parts 12 are continuously connected to the welded part 11.

As shown in Fig. 1(a), the film wrapper 10 is bag-like with its bottom sealed linearly, and the end opening weld-sealed through exothermic heat by supersonic vibration.

The shape of the film wrapper is not limited to a bag one. The both end openings may be weld-sealed.

It is preferred to weld both ends of strap 14 to the welded part 11, thereby providing a tag. It is very easy to fix the tag, which is convenient for porting a wrapper.

As shown in Fig. 1(b), it is preferred to weld a tag to the outer surface of the film wrapper 10 so as not to make the tag touch the content, since hygiene is required for the wrapper. Additionally, since there are no other members within the gathered part of the wrapper, it is possible to improve the sealing property. Needless to say, the material for the tag or engagement member is not limited to a strap.

It is preferred that the gathered opening be further longitudinally two-folded and the bent part is welded with a horn, since tearing or pinhole is surely prevented at the boundary between the welded part and no-welded part.

Next, described is the device for manufacturing the wrapper of the present invention.

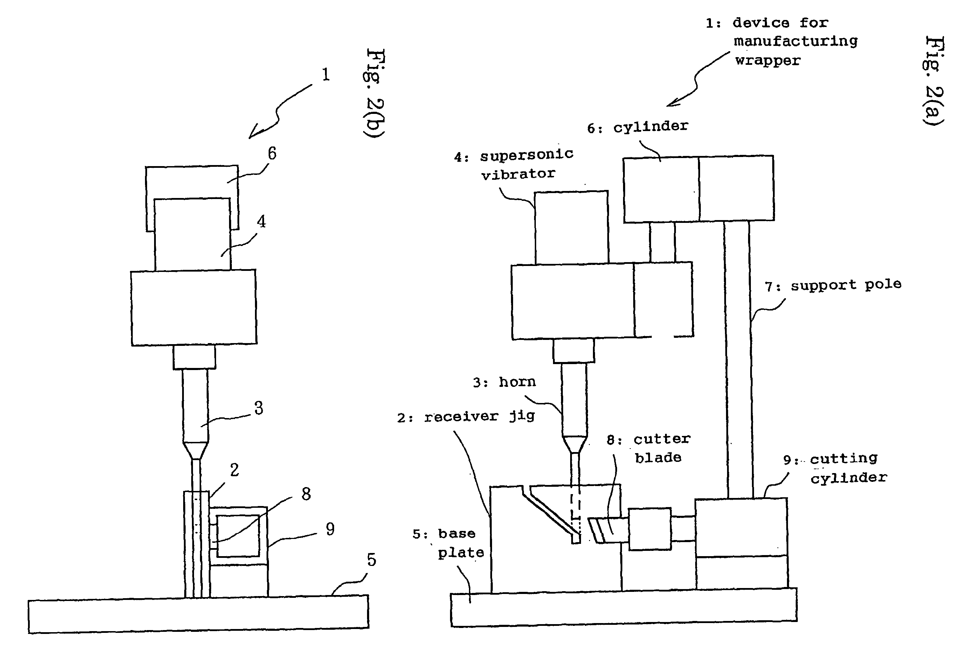

Initially the overall structure of the device will be described. Fig. 2(a) is a schematic side view showing the entire structure of the device of the present invention. On the other hand, Fig. 2(b) is a schematic front view showing the entire structure of the device of the present invention. In these figures, the device 1 comprises a receiver jig 2 on which the mainly resin-composed film wrapper (not shown) is disposed, a horn 3 for pressing the film wrapper disposed on the receiver jig 2, and a supersonic vibrator 4 for vibrating the horn 3.

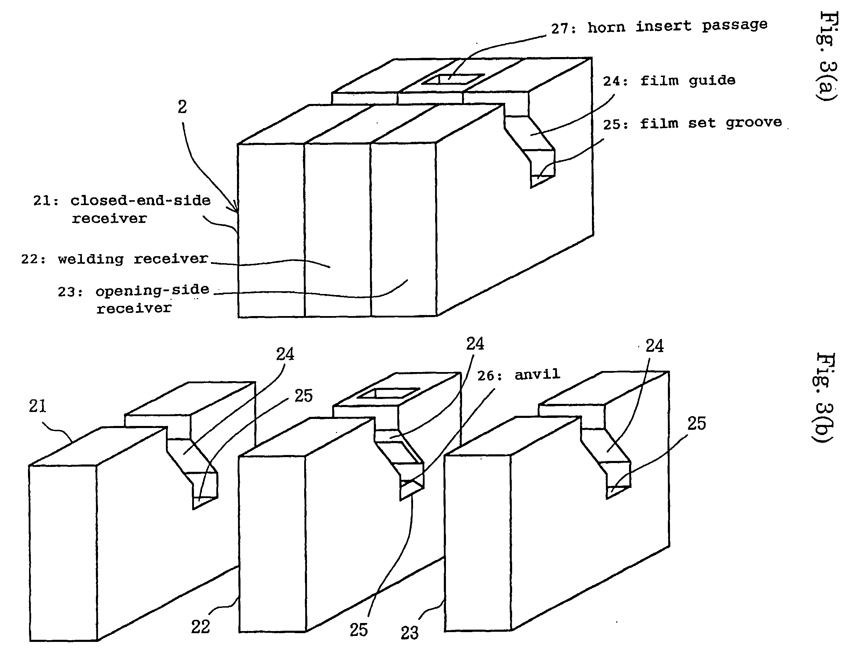

Fixed to a base plate 5 is the receiver jig 2 comprising a closed-end-side receiver 21, a welding receiver 22 and an opening-side receiver 23, as shown in Fig. 3.

Formed in each of a closed-end-side receiver 21, a welding receiver 22 and an opening-side receiver 23 is the same-shaped film guides 24 extending obliquely downward and rearward from the upper face. Further, formed at the bottom end of the film guide 24 is a film set groove 25.

Accordingly, when the gathered part of the wrapper is inserted into the entrance of the film guide 24, the gathered part is guided along the film guide 24 to the film set groove 25, thereby being placed on the anvil 26 easily.

The film guide 24 also prevents the previously gathered part from spreading away over the width of film guide 24.

It is further possible to gather even a non-gathered end opening of the wrapper by inserting this non-gathered end opening into the film guide 24 and pressing it against the film set groove 25.

Disposed on the welding receiver 22 is a metal anvil 26 of which cross section is trapezoid beveled at the both sides facing the closed-end-side receiver 21 and the opening-side receiver 23.

Consequently, it is possible to partially weld the portion of the film wrapper positioned right above the beveled segment of the anvil 26 when the horn 3 is pressed against the gathered part placed on the anvil 26.

The anvil 26 is not necessarily beveled at the both sides. The anvil 26 may not be beveled only at the side of the opening-side receiver 23. In addition, beveling may be arc-shaped or taper-shaped. Needless to say, the anvil 26 may be integrally formed with the welding receiver 22. Additionally, to improve welding efficiency a plurality of bumps may be provided on the upper surface of the anvil 26, on which bumps the gathered part is placed.

While not shown, the horn may be longer in the longitudinal direction of the gathered part than the non-beveled part of the anvil. Then, the film wrapper is fully welded at the area sandwiched between the anvil and the horn. On the other hand, the film wrapper is semi-welded at the area where the film wrapper touches only with the horn on its upper side. In this case, the film wrapper includes a completely welded part, semi-welded parts and non-welded parts formed, which parts are continuously formed. Since the semi-welded parts do not become too thin, there happens no tearing or pinhole at the boundary between the completely welded part and the semi-welded parts.

The horn and the anvil may take any shape as far as they are able to form the semi-welded part at the area located between the tip surface of the horn and the upper surface of the anvil. Accordingly, only the horn may be beveled, and both the anvil and the horn may be gradually beveled.

Formed in the upper surface of the welding receiver 22 is a horn insert passage 27 through which the horn is pressed against the anvil 26.

As shown in Fig. 2(a), the tip of the horn 3 remains inserted into the horn insert passage 27 even when the horn 3 is away from the anvil. Therefore, it is possible to prevent the horn 3 and the welding receiver 22 from gripping an obstacle therebetween when the horn moves up and down.

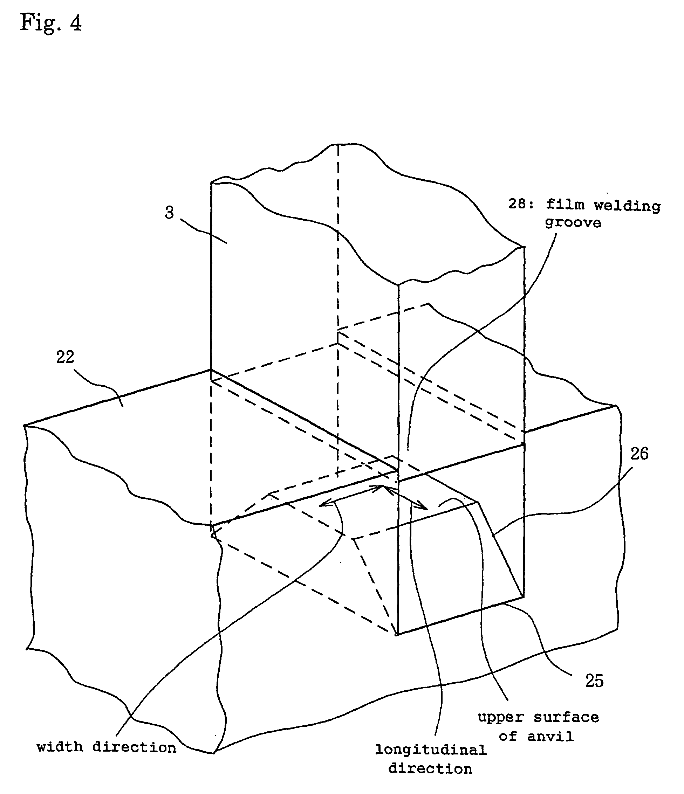

As shown in Fig. 4, the welding receiver 22 preferably includes a film-welding groove 28 defined by the upper surface of the anvil 26 and both side walls adjacent the both width-direction ends of the anvil 26. This film-welding groove 28 prevents the welded film wrapper (not shown) from flowing out sideways when the tip of the horn 3 is inserted into the film-welding groove 28. Thus, the continuity of the welded part and the semi-welded parts is kept sufficiently, thereby improving the seal strength.

Returning to Fig. 2(b), the horn 3 is mounted to the supersonic vibrator 4 and moves up and down with a cylinder 6. To improve the welding efficiency the horn 3 may have plurality of bumps on its tip.

Such specification of the supersonic vibrator 4 as driving frequency and output is determined according to the material for film, amount of film, the after-welding shape, and so forth.

The cylinder 6 is mounted to a support pole 7 attached to a base plate 5. When a microswitch (not shown) disposed on the receiver jig detects that the film wrapper is placed to be welded, the cylinder 6 automatically lowers the supersonic vibrator 4 and the horn 3. Subsequently, after a predetermined time has passed for completing the welding of the film wrapper, the cylinder 6 automatically elevates the supersonic vibrator 4 and the horn 3.

The supersonic vibrator 4 may be disposed independently from the horn 3. In this case, only the horn 3 moves up and down.

Although it is not shown in the drawings, it is obviously allowed to control the lowering distance of the horn tip or to adjust the pressing force of the horn tip against the anvil.

When the microswitch detects that the film wrapper is placed to be welded, the supersonic vibrator 4 automatically vibrates. Subsequently, when a timer detects that a predetermined time passes for completing the welding of the film wrapper, the supersonic vibrator 4 automatically stops to vibrate.

The horn 3 vibrates as the supersonic vibrator 4 vibrates.

It is preferred to dispose a cutter blade 8 moving back and forth, touched with a side surface of the opening-side receiver 23. The tip of the film wrapper can be easily cut by this cutter blade 8, thereby improving the productivity.

The cutter blade 8 is mounted to the cutting cylinder 9. To improve the workability, the cutter blade 8 moves forward before the cylinder 6 ascends.

In addition, the device may include an air-cooler or other coolers such as a low-temperature metal to cool the welded part.

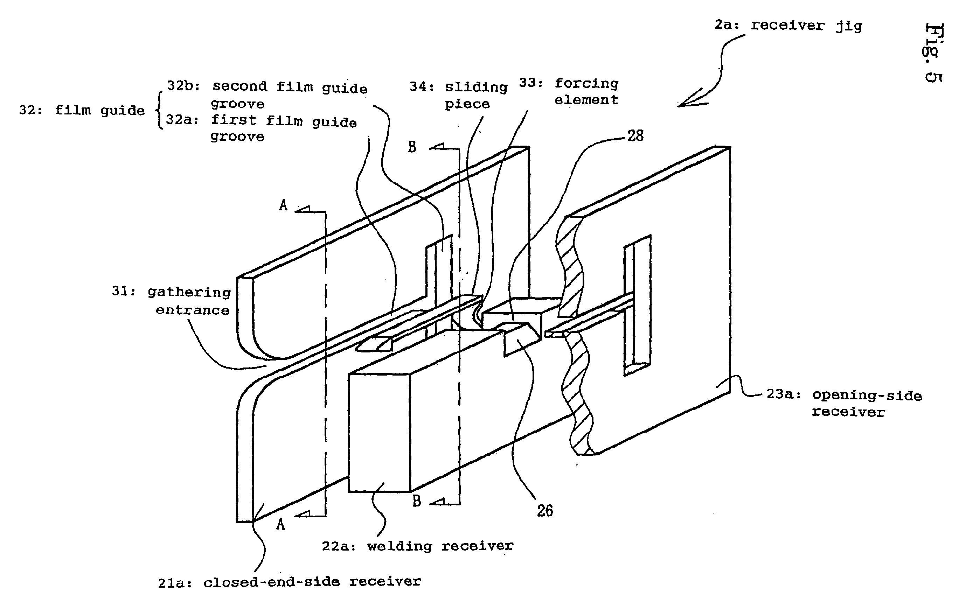

Another embodiment of the device of the present invention will be described referring to Figs. 5 to 7.

Fig. 5 is a perspective view showing a decomposed receiver jig of the device in this embodiment.

As shown in Fig. 5, a receiver jig 2a comprises a welding receiver 22a as well as a closed-end-side receiver 21a and an opening-side receiver 23a, both of them being disposed at both sides of the welding receiver 22a, respectively.

The anvil 26 is upward opened in the receiver jig 22a, where a horn insert passage is penetrated. The descending horn (not shown) is fitted to the film welding groove 28.

The closed-end-side receiver 21a and the opening side receiver 23a are symmetrical to each other, both defining a film guide 32.

The film guide 32 comprises a collecting entrance 31, a first film guide groove 32a horizontally extending from the collecting entrance 31 and a second film guide groove 32b vertically extending from the end of the first film guide groove 32a. The deeper the collecting entrance 31 goes, the narrower it becomes.

Each of the closed-end-side receiver 21a and the opening-side receiver 23a includes a sliding piece 34 forced upward by a forcing element 33 such as a leaf spring. This sliding piece 34 is disposed below the middle of the second film guide groove 32b. The sliding piece 34 prevents the gathered part of the film wrapper 10 from transferring directly from the first film guide 32a to the lower part of the second film guide groove 32b, so that the microswitch may not detect to initiate welding. When the gathered part transfers from the upper part to the lower part thereby being placed on the anvil, the sliding piece 34 is pressed to slide downward.

A microswitch 35 is mounted close to the sliding piece 34. This microswitch operates when the forcing element 33 is deformed with the sliding piece 34 rocking downward. The microswitch activates the cylinder 6, thereby lowering the horn. In this embodiment, as the gathered part of the film wrapper 10 is forced to move down so as to place the gathered part on the anvil with the sliding piece 34 rocking downward, the horn automatically descends. Accordingly, the workability is improved.

Other elements or members do not substantially differ from those of the device 1 described in the previous embodiment.

The gathered part of the film wrapper is welded with the aforementioned devices according to the following steps.

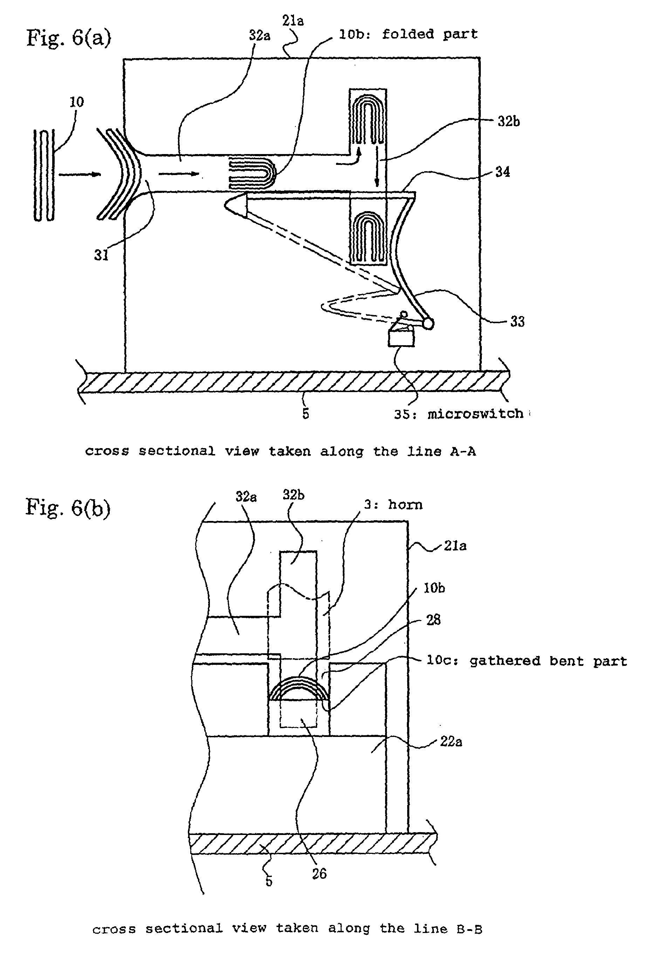

First, as shown in Fig. 6(a), the gathered part of the film wrapper 10 is inserted with its gathers arrayed vertically. The center of the gather width moves nearly along the centerline of the collecting entrance 31. In the meantime, the collecting entrance 31 makes the gathered part lying-V-shaped (folded at the center of the gather width).

The lying-V-shaped gathered part moves with the folded part 10b heading, being guided by the first film guide groove 32a. Subsequently, the gathered part moves into the upper part of the second film guide groove 32b with the gathered part being inverse-V-shaped (the folded part being upside). Succeedingly, the gathered part 10b moves downward, with the folded part 10b remaining inverse-V-shaped.

As shown in Fig. 6(b), the gathered part is placed on the anvil 26, being loose and inverse V-shaped. When the horn 3 descends, a folded part 10b is pressed by the horn 3. Therefore, the gathered bent part 10c is forcibly pressed against the wall of the film-welding groove 28, thereby aligning all the gathers.

A portion of the gathered bent part 10c may project when the opening of the film wrapper 10 is gathered. However, all the gathers align without any projection when welded on the anvil. That is, even if the gathering is not precisely conducted with a portion of the bent part projecting, it is possible to surely avert the tearing or pinhole at the boundary between the welded part and the semi-welded part.

In general, the level of the bottom surface of the second film guide groove 32b is preferably equal to or lower than the level of the upper surface of the anvil 26, because the gathered part can be precisely placed on the anvil 26.

The second film guide groove 32b is preferably narrower than the anvil 26 in the longitudinal direction of anvil 26 so that the gathered part can be securely fitted to the film-welding groove 28.

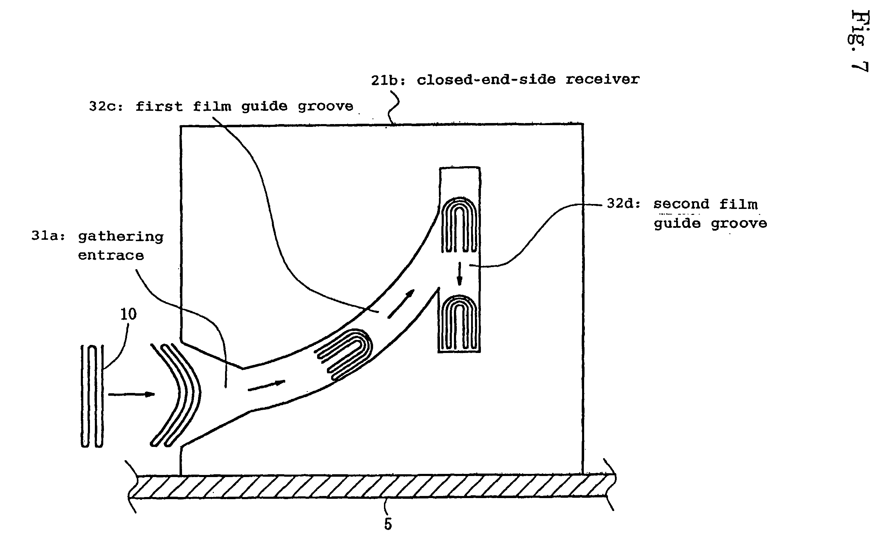

The collecting entrance and the film guide is not necessarily to be shaped and/or arranged as aforementioned. As shown in Fig. 7, a closed-end-side receiver 21b may include a collecting entrance 31a having an acute-angled triangle shape such that the gathered part may easily be folded.

The closed-end-side receiver 21b may have a first film guide 32c extending obliquely upward like an arc so that the gathered part can smoothly move from the first film guide groove 32c to a second film guide groove 32d.

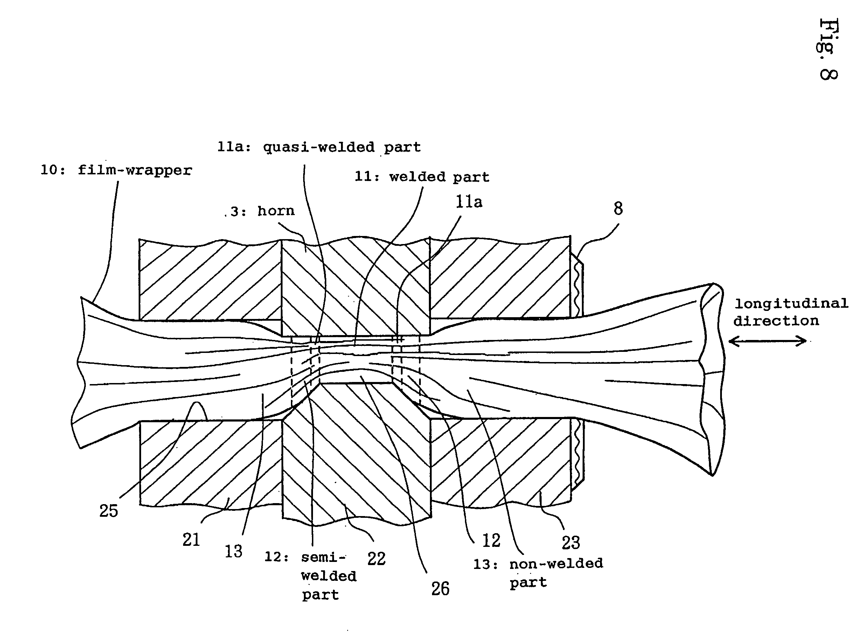

Next, the method for manufacturing the wrapper of the present invention will be described referring to Figs. 8 to 10.

Fig. 8 is a enlarged cross sectional view showing the gathered part in a welded state. Placed on the film set groove 25 is the gathered end of the film wrapper 10.

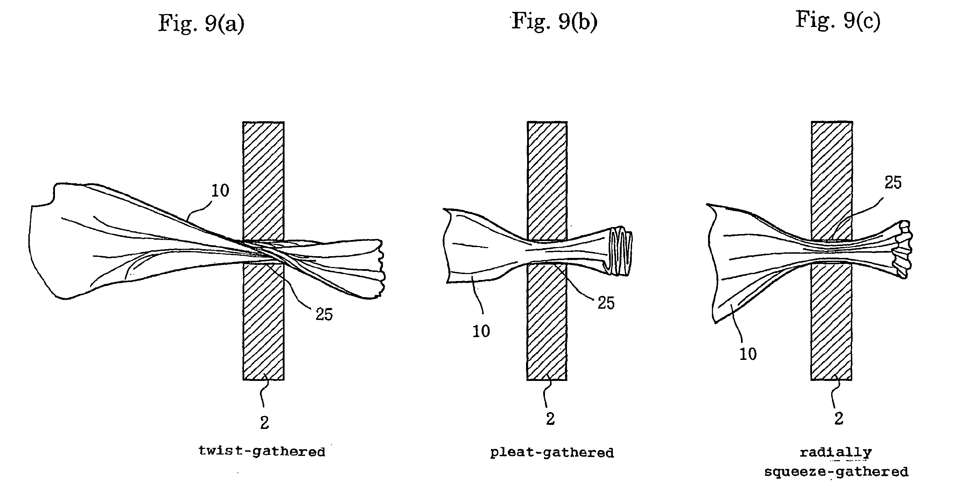

Concerning the way of gathering, as shown in Figs. 9(a) to 9(c), there are several ways of twist-gathering, pleat-gathering, radial squeeze-gathering, etc. The way of gathering, however, is not restricted to them. Any way will do, as far as such gathered part is arranged on the film set groove.

No sooner is the film wrapper 10 arranged on the film set groove 25 of the receiver jig 2 than the microswitch turns on. Subsequently, the supersonic vibrator 4 vibrates and the horn 3 descends by the cylinder 6.

When the tip of the horn 3 touches the film wrapper 10, the vertical supersonic vibration generates the alternating pressure and compression-expansion motion. As a result, exothermic heat is generated between the horn 3 and the film wrapper 10, between the gathered portions, and between the film wrapper 10 and the upper surface of the anvil 26.

Consequently, the completely welded part 11 having seal function is created in the area enclosed by the tip surface of the horn 3 and the top surface of the anvil 26.

The. determined thickness is obtained for the welded part 11 by adjusting the lowest stop level of the cylinder 6 with a stopper or with controlling the pressure power. Accordingly, it is possible to prevent the welded part 11 from being crashed or overheated.

The farther the portion of the gathered part is away from the anvil, the weaker the aforementioned alternating pressure becomes creating the lower exothermic heat due to the oblique surfaces of the anvil 26.

Consequently, the semi-welded part 12 is created in the area enclosed by the horn 3 and the oblique surface of the anvil 26, since the temperature becomes lower at this area. The semi-welded part 12 cannot become too thin, since it is not completely welded.

Accordingly, the film wrapper 10 continuously includes welded part 11a, semi-welded part 12 and non-welded part 13 near the welded part 11 within the area enclosed by the lower surface of the horn 3 and the top and the oblique surface of the anvil 26. Since the semi-welded part 12 cannot be too thin, it is possible to avert the tearing or pinhole, thereby keeping the seal.

Although not shown, a portion of the welded film wrapper 10 flows out from the welded part to the semi-welded part. Thus, the semi-welded part 12 is harder than the non-welded part 13 with flexibility, but softer than the hardened welded part 11. That is to say, the semi-welded part functions as a buffer part for both the welded part 11 and non-welded part 12, improving the sealing property.

The supersonic vibrator 4 no sooner stops to vibrate than the cutter blade 8 (disposed adjacent the opening-side receiver 23) transfers forward and cuts down the surplus wrapper 10 at the side of opening, thereby improving the workability.

The cutting surface position can change to comply with the thickness of opening-side receiver 23.

Subsequently, the cylinder 6 ascends, detaching the horn 3 away from the wrapper 10. The operator is able to easily remove the film wrapper 10 from the receiver jig 2.

As aforementioned, according to the method of the present invention, it is possible to manufacture the wrapper having the superior sealing property since the semi-welded part is created when the gathered part is weld-sealed. The method of manufacturing a wrapper can be used in the aforementioned device.

Further, as shown in Fig. 6, the gathered opening of the film wrapper 10 is preferably folded at the center of the width, and then placed on the anvil 26 with the folded part facing upward, followed by pressing the horn 3 against the folded part 10b so as to press the bent part 10c against the wall surface of the film-welding groove 28. In such a way, even if the opening is gathered with low precision, the occurrence of tearing and pinholes can be efficiently and surely prevented at the boundary between the welded part and non-welded part.

The following is to explain the experiments where a wrapper is manufactured using the above-described device.

The material of a film wrapper was a nylon-polyethylene bag co-extruded and linearly sealed at the bottom of which size is about 24 cm (length) x about 10 cm (width) x about 75 µm (thickness; about 15 µm for nylon + about 60 µm for polyethylene).

The device for manufacturing the wrapper was equipped with a supersonic vibrator where the vibration frequency was 30 kHz and the output was 300 W.

The tip surface of the horn was of a rectangular of which size was about 11 mm (length) x about 5 mm (width).

The cross section of the anvil was of a trapezoid of which size was about 5 mm (upper side) x about 11 mm (lower side) x about 3 mm (height). The anvil was of parallelepiped with a deep of about 5 mm.

Prepared were 300 nylon-polyethylene bags. Contained in these nylon-polyethylene bags, respectively, were about 200 g of "shirataki" (made of konnyaku potato; a Japanese food material for sukiyaki, etc.) an about 170 cc of water. These 300 bags were grouped into three (100 wrappers each). One group is of twist-gathered openings. Another is of pleat-gathered ones. And the other is of radically squeeze-gathered ones.

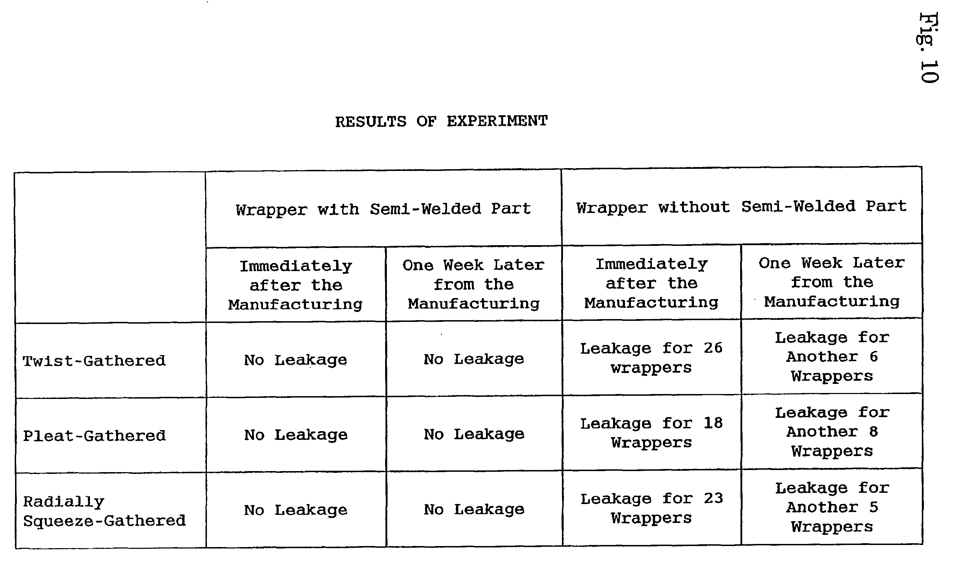

All of these 300 bags were observed immediately after the manufacturing and one week later from the manufacturing. No leakage was observed as shown in Fig. 10.

On the contrary, 300 wrappers without a semi-welded part were prepared in a conventional way with an anvil of rectangular parallelepiped of which size was about 11 mm (length) x about 11 mm (depth) x about 3 mm (height). Other conditions were the same as above-described. As shown in Fig. 10, leakage was observed in about 20 bags of each group immediately after the manufacturing. Further, leakage was observed in about another 6 bags of each group one week later from the manufacturing.

It is confirmed from these results of experiment, that the bags of the present invention having a semi-gathered part are superior in sealing property regardless of the way of gathering.

As shown in Fig. 1(b), the wrappers used in these experiments were bent at the weld-sealed portion nearly at a right angle. It has proven, however, that the wrapper of the present invention is quite resistant to the tearing i.e. leakage) since the bent portion is reinforced with the semi-welded part.

In the wrapper of the present invention one portion of the welded film wrapper flows out over the semi-welded part. Thus, the semi-welded part is harder than non-welded part with flexibility, but softer than the hardened welded part. Therefore, the semi-welded part functions as a buffer zone for the welded part and non-welded part, thereby improving a sealing property.

Since the semi-welded part does not become too thin and continuously connects to the welded part, thereby preventing the boundary between the welded and non-welded parts from tearing or having pinholes.

According to the device and method of the present invention, there are provided the anvil of which a side surface is beveled in the longitudinal direction of the gathered part, and a horn wider than the upper surface of the anvil in the longitudinal direction. A part of film wrapper becomes semi-welded in the area enclosed by the beveled anvil and the horn, thereby forming welded part, semi-welded part and non-welded part continuously. As a result, the physical strength can be improved at the boundary of the welded part and non-welded part, securing the sealing property.

### Industrial Applicability

The present invention can be widely applied to any wrapper where a film wrapper is mainly composed of a resin, and an end opening is gathered and weld-sealed through exothermic heat generated by supersonic vibration, as well as the device and method for manufacturing the same.

## Claims

1. A wrapper comprising a film wrapper mainly composed of a resin with its end opening being gathered and weld-sealed through exothermic heat by super sonic vibration, **characterized in that** the weld-sealed end opening includes a completely welded part and a semi-welded part continuous therewith.

2. The film wrapper according to claim 1, wherein the film wrapper is bag-shaped.

3. The film wrapper according to claim 1 or 2, wherein a tag and/or an engagement member welded and attached to the weld-sealed end opening.

4. A device for manufacturing a wrapper comprising a film wrapper mainly composed of a resin with its end opening being gathered and weld-sealed through exothermic heat by super sonic vibration, **characterized in that** the device includes an anvil on which the gathered opening is placed, and a horn wider than the anvil in a longitudinally direction of the gathered opening.

5. The device according to claim 4, **characterized in that** the longitudinal side end of the anvil is beveled.

6. The device according to claim 4 or 5, **characterized in that** the device further includes a film guide for guiding the end opening of the film wrapper onto the anvil.

7. The device according to any one of claims 4 to 6, **characterized in that** the device further includes a film welding groove defined by the anvil and walls formed adjacent both width-direction side ends of the anvil.

8. The device according to any one of claims 4 to 7, **characterized in that** the device further includes a cutter for cutting a top part of the gathered opening.

9. The device according to any one of claims 6 to 8, **characterized in that** the film guide includes a collecting entrance for folding and collecting the gathered opening along a centerline of the gather width, and a film guide groove for guiding the folded gathered opening onto the anvil so that a top of the folded part of the folded gathered opening contacts the horn.

10. A method for manufacturing a wrapper comprising a film wrapper mainly composed of a resin with its end opening being gathered and weld-sealed through exothermic heat by supersonic vibration, **characterized in that** this method includes the steps of gathering an end opening of the film wrapper, and providing a gathered part with supersonic vibration and welding the gathered part, thereby forming a completely welded part and a semi-welded part continuous therewith.

11. The method according to claim 10, **characterized in that** the method includes the steps of gathering an opening of the film wrapper, folding the gathered opening along a centerline of the gather width, disposing the folded gathered part on an anvil with a folded part being upside, and weld-sealing the folded part by pressing a horn against the folded part in such a way that a bent part is pressed against a wall surface of a film welding groove.
